# EUROPEAN PATENT SPECIFICATION

(11) **EP 4 160 126 B1**
(45) Date of publication and mention of the grant of the patent: **18.09.2024**
(21) Application number: 21843556.8
(22) Date of filing: 09.07.2021
(51) Int. Cl.: A23L 3/36, F25D 23/12, F25D 29/00, F25D 31/00, F25D 17/04

(54) **REFRIGERATOR PRESERVATION CONTROL METHOD AND REFRIGERATOR**
VERFAHREN ZUR STEUERUNG DER KONSERVIERUNG EINES KÜHLSCHRANKS UND KÜHLSCHRANK
PROCÉDÉ DE COMMANDE DE CONSERVATION AU RÉFRIGÉRATEUR ET RÉFRIGÉRATEUR

(30) Priority: 13.07.2020 CN 202010670629
(43) Date of publication of application: 05.04.2023
(73) Proprietor: Qingdao Haier Refrigerator Co., Ltd., Laoshan District Qingdao Shandong 266101 (CN); Haier Smart Home Co., Ltd., Qingdao, Shandong 266101 (CN)
(72) Inventor: LI, Xiaofeng, Qingdao, Shandong 266101 (CN); JI, Lisheng, Qingdao, Shandong 266101 (CN); CUI, Zhanpeng, Qingdao, Shandong 266101 (CN); SONG, Xiangpeng, Qingdao, Shandong 266101 (CN); HAN, Zhiqiang, Qingdao, Shandong 266101 (CN); LI, Chunyang, Qingdao, Shandong 266101 (CN); WANG, Kai, Qingdao, Shandong 266101 (CN)
(74) Representative: Ziebig Hengelhaupt Intellectual Property Attorneys Patentanwaltskanzlei PartGmbB
(86) International application number: PCT/CN2021/105499
(87) International publication number: WO 2022/012430

(56) References cited:
- WO-A1-2019/146950
- CN-A- 107 631 548
- CN-A- 108 870 855
- CN-A- 108 870 856
- CN-A- 108 870 857
- CN-A- 109 323 525
- CN-A- 110 793 258
- CN-A- 111 207 561
- US-A1- 2002 017 103

## Description

### FIELD OF THE INVENTION

The present invention relates to the field of refrigeration, and particularly relates to a refrigerator preservation control method and a refrigerator.

### BACKGROUND OF THE INVENTION

Frozen food materials can maintain the freshness, nutritional value and original flavor to the maximum extent in the cryopreservation process. There are two main ways to preserve frozen food materials in traditional refrigerators. One is long-term low-temperature storage at -14°C to -24°C, and the other is short-term soft freezing storage at about -4°C. However, when undergoing long-term low-temperature storage, a food material needs to be thawed for a long time before it is handled, which is inconvenient for a user to handle the food material quickly; and when the food material undergoes short-term soft freezing storage, there would be problems of long time for the food material to undergo an ice crystal zone during freezing, poor preservation effect and short storage time. Therefore, there is an urgent need to provide a solution for storing a frozen food material in a refrigerator that has a short-term soft freezing storage function of enabling the food material to quickly undergo the ice crystal zone and to be ready to eat.

Prior art CN 111 207 561 A provides a refrigerator with a variable temperature chamber. The variable temperature chamber is internally provided with a weight detection module, a temperature detection module and a temperature control module, wherein the weight detection module is used for detecting the weight of objects stored in the variable temperature chamber; the temperature detection module is used for detecting the temperature in the variable temperature chamber; and the temperature control module is configured to receive a user-selected working mode of the variable temperature chamber, determine a corresponding temperature control curve according to a current working mode of the variable temperature chamber and the weight of the objects, and heat or cool according to the relationship between thereal-time temperature in the variable temperature chamber and the corresponding temperature control curve. The refrigerator can be utilized to accurately control the power of a temperature adjustment module according to the temperature control curve, so that the time for the variable temperature chamber to reach a target temperature corresponding to the mode is controllable and the working effect of the variable temperature chamber is better.

WO 2019/146950 A1 relates to a refrigerator and a method for controlling an operation by estimating the thermal capacity of a product. The refrigerator for controlling an operation thereof by estimating the thermal capacity of a product, according to one embodiment of the present invention, comprises: at least one partitioned storage space; a camera for photographing a product stored in the storage space; a controller for estimating the thermal capacity of the product on the basis of an image taken by the camera and setting an operation phase of the refrigerator on the basis of the estimation result; and a compressor for providing cooling capacity to the refrigerator on the basis of the setting of the controller.

CN 109 323 525 A provides a refrigerator. The refrigerator comprises a box body, a refrigerating door body, a temperature-variable door body, a freezing door body and an unfreezing device. A refrigerating chamber, a temperature-variable chamber and a freezing chamber are defined in the box body. The refrigerating door body, the temperature-variable door body and the freezing door body are used for opening and closing a picking and placing opening of the refrigerating chamber, a picking and placing opening of the temperature-variable chamber and a picking and placing opening of the freezing chamber correspondingly. The unfreezing device comprises a barrel, a device door body, a radio frequency generation module and a radio frequency antenna. An unfreezing cavity used for containing a to-be-processed object is defined in the barrel. The device door body is used for opening and closing a picking and placing opening of the unfreezing cavity. The radio frequency antenna is electrically connected with the radio frequency generation module. The radio frequency antenna is configured to generate radio frequency waves with the corresponding frequency in the unfreezing cavity according to a radio frequency signal to unfreeze the to-be-processed object in the unfreezing cavity. The unfreezing device is arranged in the freezing chamber. According to the refrigerator, the unfreezing device is specially arranged in the freezing chamber, users can take out and put back the to-be-processed object without opening the door bodies of the other chambers, and the convenience of to-be-processed object picking and placing is improved for the users.

Further relevant prior art can be found in US2002017103A1.

### BRIEF DESCRIPTION OF THE INVENTION

One objective of the present invention is to overcome at least one technical defect of the prior art and to provide a refrigerator preservation control method and a refrigerator that have both the advantage of enabling a food material to quickly undergo an ice crystal zone and the advantage of enabling the food material to be ready to eat.

One further objective of the present invention is to control the refrigerator to operate in different operating modes according to differences in the temperature of a food material, thereby achieving instant preservation of the food material.

Another further objective of the present invention is to separate a freezer preservation area to reduce the refrigeration influence of other spaces in the storage compartment on the freezer preservation area.

The present invention is defined by claims 1 and 7.

The present invention provides the refrigerator preservation control method and the refrigerator. In the refrigerator preservation control method provided in the present invention, the temperature of the object to be handled placed in the freezer preservation chamber is detected, thus the refrigerator is controlled to operate in different operating modes according to differences in the temperature of the object to be handled, thereby achieving instant preservation.

Further, in the present invention, the preset safe temperature threshold value is set to be lower than the second preset temperature threshold value, thus it can be guaranteed that both the inside and outside of the food material may undergo the ice crystal zone quickly, thereby achieving a better preservation effect.

Further, in the present invention, by arranging the at least one thermal baffle, the freezer preservation area can be separated in the storage compartment where the freezer preservation chamber is located, and then the freezer preservation chamber is arranged in the freezer preservation area, which may effectively isolate heat exchange between the freezer preservation chamber and other spaces in the storage compartment and reduce the refrigeration influence of other spaces on the freezer preservation chamber.

These and other objectives, advantages and features of the present invention will be better understood by those skilled in the art in the light of the detailed description of specific embodiments of the present invention in conjunction with the accompanying drawings below.

### BRIEF DESCRIPTION OF THE DRAWINGS

Some specific embodiments of the present invention will be described below in detail in an exemplary rather than a limiting manner with reference to the accompanying drawings. Identical reference numerals in the accompanying drawings indicate identical or similar components or parts. It should be understood by those skilled in the art that these accompanying drawings are not necessarily drawn to scale. In the accompanying drawings:
Fig. 1 is a schematic section view of a refrigerator according to an embodiment of the present invention, showing a flow path of cold airflow for refrigerating a storage area and a freezer preservation area;
Fig. 2 is a schematic section view of an air duct cover plate according to an embodiment of the present invention;
Fig. 3 is a schematic diagram of a refrigerator preservation control method according to an embodiment of the present invention; and
Fig. 4 is a flow chart of a refrigerator preservation control method according to an embodiment of the present invention.

### DETAILED DESCRIPTION

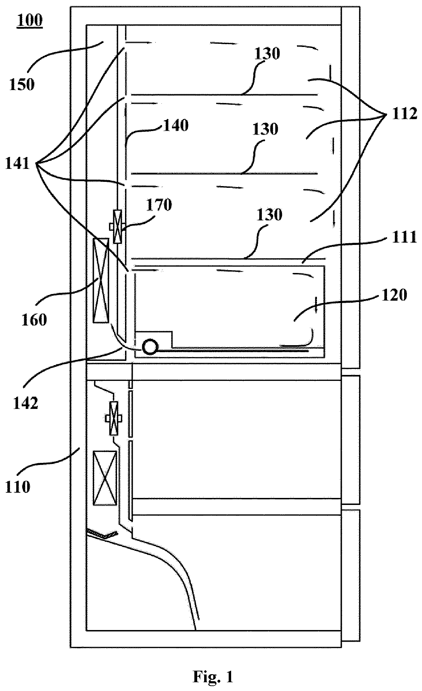

Fig. 1 is a schematic section view of a refrigerator 100 according to an embodiment of the present invention, showing a flow path of cold airflow for refrigerating a storage area and a freezer preservation area. Referring to Fig. 1, the refrigerator 100 includes a cabinet 110, a freezer preservation chamber 120 and a control module.

The cabinet 110 defines at least one storage compartment. In the illustrated embodiment, the cabinet 110 defines two storage compartments. Both of the storage compartments are opened forwards. In some other embodiments, the storage compartments may also be opened upwards.

The freezer preservation chamber 120 is arranged in the at least one storage compartment. In the case where the cabinet 110 define two storage compartments, the at least one storage compartment may include a refrigerating compartment and a freezing compartment. As known to those skilled in the art, the refrigerating compartment refers to a storage compartment where the preservation temperature of food materials is 0 to 8°C; and the freezing compartment refers to a storage compartment where the preservation temperature of the food materials is -24°C to -14°C. The freezer preservation chamber 120 may be arranged in the refrigerating compartment, so as to reduce the impact of thawing or maintaining soft freezing temperature on the food materials preserved in the storage compartment.

Further, the refrigerator 100 may further include at least one thermal baffle 130, which is arranged in one storage compartment together with the freezer preservation chamber 120 and configured to separate a freezer preservation area 111 in the storage compartment. The freezer preservation chamber 120 is arranged in the freezer preservation area 111. In the illustrated embodiment, the thermal baffles 130 are all arranged to extend in a horizontal direction. In the embodiments of the present invention, by arranging the thermal baffles 130, the storage compartment where the freezer preservation chamber 120 is located may be separated into the freezer preservation area 111 and at least one storage area 112, and then the freezer preservation chamber 120 is arranged in the freezer preservation area 111, which may effectively isolate heat exchange between the freezer preservation chamber 120 and other storage areas 112 in the storage compartment and reduce the refrigeration influence of other storage areas 112 on the freezer preservation chamber 120. The freezer preservation area 111 may be arranged below the at least one storage area 112.

In some other embodiments, the refrigerator 100 may further be provided with thermal baffles that extend in a vertical direction, and the thermal baffles extending in the horizontal direction and the thermal baffles extending in the vertical direction may be peripherally arranged on the outer side of the freezer preservation chamber 120 in an end-to-end connection mode. Therefore, the heat exchange between the freezer preservation chamber 120 and other storage areas 112 in the storage compartment may be further isolated, thereby ensuring the thermal insulation property of the freezer preservation chamber.

The control module includes a memory and a processor. The memory stores a control program, and when being executed by the processor, the control program is used for implementing the refrigerator preservation control method according to the present invention. The control module may be arranged on an electrical control panel of the refrigerator to facilitate installation and maintenance of the control module.

The refrigerator 100 includes a temperature sensor. The temperature sensor is arranged on an inner wall of the freezer preservation chamber 120 to sense whether an object to be handled is placed in the freezer preservation chamber 120, and detect the temperature of the object to be handled when sensing the object to be handled. By arranging the temperature sensor on the inner wall of the freezer preservation chamber 120, the accuracy of temperature detection of the object to be handled can be improved.

The refrigerator 100 further includes a heating unit and a refrigeration unit. The refrigeration unit is configured to refrigerate the freezer preservation chamber 120, so as to freeze the object to be handled placed in the freezer preservation chamber 120. Specifically, the refrigeration unit may include a compressor, a condenser, a throttling element and an evaporator. The heating unit is configured to heat the freezer preservation chamber 120, so as to thaw the frozen object to be handled. Specifically, the heating unit may include an electromagnetic wave generation system which is at least partially arranged in the freezer preservation chamber 120 or communicated to the inside of the freezer preservation chamber 120 to generate electromagnetic waves to thaw the object to be handled. The electromagnetic wave generation system may be at least partially arranged on the outer side of the cabinet 110 to avoid fluctuations in the temperature of the compartment caused by the generated heat. The outer side of the cabinet 110 herein refers to the side of the cabinet 110 exposed to ambient air, and the inner side of the cabinet 110 refers to the storage compartment.

The electromagnetic wave generation system may include an electromagnetic wave generation module, configured to generate an electromagnetic wave signal; a power supply module, electrically connected with the electromagnetic wave generation module and configured to supply electric energy to the electromagnetic wave generation module to make the electromagnetic wave generation module generate the electromagnetic wave signal; a radiating antenna, electrically connected with the electromagnetic wave generation module and configured to radiate electromagnetic waves at a corresponding frequency according to the electromagnetic wave signal to thaw the object to be handled in the freezer preservation chamber 120; and a signal processing and measurement and control circuit, configured to detect characteristic parameters of the electromagnetic waves.

The electromagnetic wave generation module and the power supply module may be arranged on the outer side of the cabinet 110. The signal processing and measurement and control circuit may be arranged at the bottom of the freezer preservation chamber 120. The signal processing and measurement and control circuit may be integrated on a circuit board, so as to facilitate installation and maintenance of the signal processing and measurement and control circuit.

In some embodiments, the refrigerator 100 may be an air-cooled refrigerator. Each storage compartment may be internally provided with an air duct cover plate 140 respectively, so as to separate a refrigeration air duct 150 in the inside of each storage compartment. Each refrigeration air duct 150 may be provided with an evaporator 160 and a refrigeration fan 170 respectively, so as to enable the refrigeration unit to refrigerate one of the storage compartments separately. Of course, in the case where the cabinet defines a plurality of storage compartments, an evaporator 160 and a refrigeration fan 170 may also be arranged in only one of the refrigeration air ducts 150, and the refrigeration air duct 150 where the evaporator 160 is located selectively communicates with other refrigeration air ducts 150. In this embodiment, the refrigeration air duct 150 where the evaporator 160 is located selectively communicates with other refrigeration air ducts 150, thus the refrigeration unit may only refrigerate the storage compartment where the evaporator 160 is located or refrigerate a plurality of storage compartments at the same time.

At least one air supply outlet 141 and an air return inlet 142 may be formed in each air duct cover plate 140, so as to circulate air in the storage compartment for refrigeration. There may be a plurality of air supply outlets 141. An air supply outlet 141 and an air return inlet 142 may be formed in the freezer preservation chamber 120, so as to circulate air in the freezer preservation chamber 120 for refrigeration. The air return inlet 142 may be formed below the plurality of air supply outlets 141, so as to make refrigeration more adequate.

In some other embodiments, the refrigerator 100 may also be a direct cooling refrigerator. That is, each storage compartment may be provided with an evaporator 160 and cold is transferred by means of natural convection.

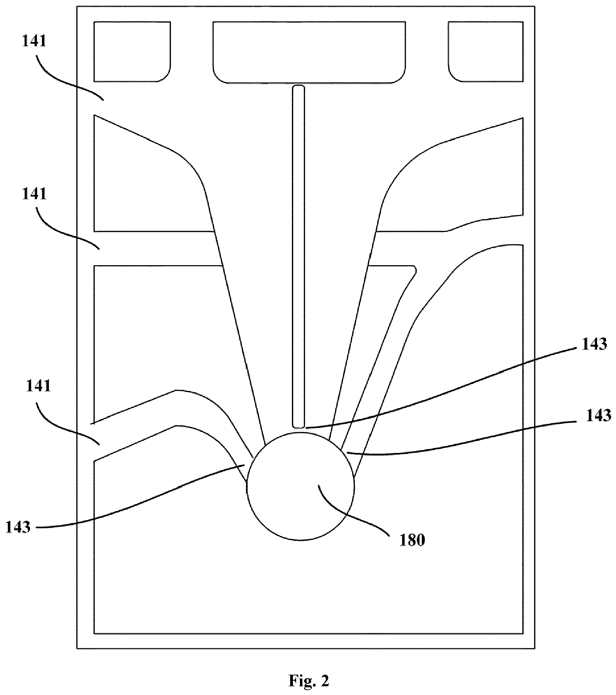

Fig. 2 is a schematic section view of the air duct cover plate 140 according to an embodiment of the present invention. Referring to Fig. 2, in some embodiments, the air duct cover plate 140 may be clamped into the rear wall of the storage compartment to from an air return portion of the refrigeration air duct 150, and the evaporator 160 may be arranged in the air return portion. The air duct cover plate 140 itself may be provided with at least one air supply portion of a compartment duct, and each air supply portion may be provided with at least one air supply outlet 141 and an air inlet 143.

The air duct cover plate 140 may also be provided with a volute 180 for containing the refrigeration fan 170. The volute 180 is configured to be rotatable and to make its air outlet in butt joint with the air inlet 143 of one air supply portion, so as to convey cold airflow refrigerated by the evaporator 160 to the air supply portion and blow it out from the air supply outlet 141 of the air supply portion.

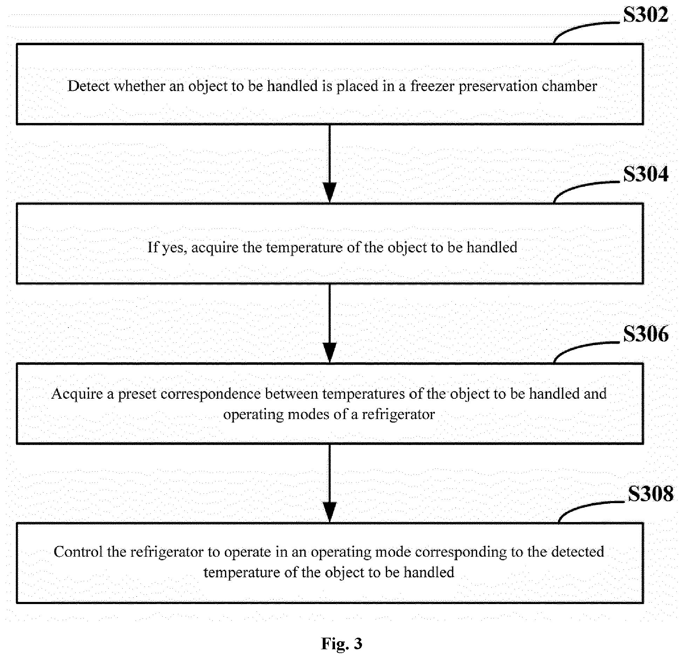

Fig. 3 is a schematic diagram of a refrigerator preservation control method according to an embodiment of the present invention. Referring to Fig. 3, the refrigerator preservation control method provided in this embodiment may include steps S302 to S308. The refrigerator 100 includes a cabinet 110, a freezer preservation chamber 120 and a control module. The cabinet 110 defines at least one storage compartment. The freezer preservation chamber 120 is arranged in the at least one storage compartment. The control module includes a memory and a processor. The memory stores a control program, and when being executed by the processor, the control program is used for implementing the refrigerator preservation control method according to the present invention

Step S302, whether an object to be handled is placed in the freezer preservation chamber is detected, the object to be handled referring to a food material needs to be kept fresh in the refrigerator.

Step S304, if yes, the temperature of the object to be handled is acquired. The temperature of the object to be handled may be a surface temperature of the object to be handled.

Step S306, a preset correspondence between temperatures of the object to be handled and operating modes of the refrigerator is acquired.

Step S308, the refrigerator 100 is controlled to operate in an operating mode corresponding to the acquired temperature of the object to be handled.

In the present invention, the temperature of the object to be handled placed in the freezer preservation chamber is detected, and the refrigerator 100 is controlled to operate in different operating modes according to differences in the temperature of the object to be handled, thereby achieving instant preservation of the food material in the refrigerator 100.

The refrigerator 100 includes a temperature sensor arranged on an inner wall of the freezer preservation chamber 120. In this embodiment, step S302 may include sensing whether the object to be handled is placed in the freezer preservation chamber by means of the temperature sensor, and detecting the temperature of the object to be handled when sensing the object to be handled.

The operating modes include a quick freezing mode and a quick thawing mode. The quick freezing mode is configured to refrigerate the freezer preservation chamber 120 to reduce the temperature of the object to be handled. The quick thawing mode is configured to thaw the freezer preservation chamber 120 to increase the temperature of the object to be handled. The operating modes may further include a preservation mode. The preservation mode may be configured to maintain the temperature of the freezer preservation chamber 120 at a preset preservation temperature threshold value.

When the refrigerator 100 operates in the quick freezing mode, the refrigeration unit may refrigerate the freezer preservation chamber 120 separately by rotating the volute. In this case, the air volume entering the freezer preservation chamber 120 increases, such that the inside of a food material placed in the freezer preservation chamber 120 undergoes an ice crystal zone quickly, which is conducive to the improvement of the preservation effect.

When the refrigerator 100 operates in the quick thawing mode, the freezer preservation chamber 120 is heated by means of the heating unit, so as to increase the temperature of the freezer preservation chamber 120, such that the temperature of the food material placed in the freezer preservation chamber 120 can increase, thereby thawing the frozen food material.

Before performing step S306, in some embodiments, the correspondence between the temperatures of the object to be handled and the operating modes may be pre-established, and may be stored in the control module, and thus after acquiring the current temperature of the object to be handled, the control module determines an operating mode corresponding to the current temperature of the object to be handled according to the pre-established correspondence between the temperatures of the object to be handled and the operating modes, and control the refrigerator 100 to operate in the determined operating mode. The refrigerator 100 of this embodiment may automatically enter into different operating modes according to differences in the temperature of the object to be handled, which makes the preservation control method of the food material more flexible, thereby achieving a better preservation effect

Step S308 includes: controlling, when the temperature of the object to be handled is greater than a first preset temperature threshold value, the refrigerator 100 to operate in the quick freezing mode; and controlling, when the temperature of the object to be handled is lower than a second preset temperature threshold value, the refrigerator 100 to operate in the quick thawing mode. The first preset temperature threshold value is set to be greater than the second preset temperature threshold value.

In some other embodiments, the operating modes may further include the preservation mode. The preservation mode may be configured to maintain the temperature of the freezer preservation chamber at the preset preservation temperature threshold value. The preset preservation temperature threshold value may be set between the first preset temperature threshold value and the second preset temperature threshold value. In this case, the step of controlling the refrigerator 100 to operate in the operating mode corresponding to the temperature of the object to be handled may also include: controlling, when the temperature of the object to be handled is greater than or equal to the second preset temperature threshold value but lower than or equal to the first preset temperature threshold value, the refrigerator 100 to operate in the preservation mode.

It should be noted that, the first preset temperature threshold value, the second preset temperature threshold value and the preset preservation temperature threshold value may be experimentally determined according to preservation effects of the food material at different temperatures.

Exemplarily, if the first preset temperature threshold value may be set to 0°C and the second preset temperature threshold value may be set to -5°C, then the preset preservation temperature threshold value is set to -4°C. It should be noted that, although the first preset temperature threshold value, the second preset temperature threshold value and the preset preservation temperature threshold value set in the exemplary embodiment are point values, the first preset temperature threshold value, the second preset temperature threshold value and the preset preservation temperature threshold value in the present invention are all not limited to point values, and in some embodiments, the first preset temperature threshold value, the second preset temperature threshold value and the preset preservation temperature threshold value may also be set to different threshold value ranges, respectively.

Considering that the freezing of food materials is done by carrying out heat exchange between cold air of the compartment and the outer surfaces of the food materials, and then slowly conducting heat for freezing from the outside to the inside, and for different kinds of food materials, or food materials with relatively large differences in boundary dimension, the freezing temperatures required to achieve the freezing of both the insides and the outsides of the food materials within the same time range are different, in order to avoid excessive freezing, a safe temperature may be set, so as to ensure that both the insides and the outsides of the food materials have quickly undergone the ice crystal zone, thereby guaranteeing the preservation effect. With respect to this case, in some embodiments, in the process that the refrigerator 100 operates in the quick freezing mode, if the temperature of the object to be handled decreases to a preset safe temperature threshold value, the refrigerator 100 may be controlled to operate in the quick thawing mode, so as to increase the temperature of the freezer preservation chamber 120 quickly, thereby quickly thawing the object to be handled. At this moment, if the temperature of the object to be handled increases to the preset preservation temperature threshold value, the refrigerator 100 is controlled to operate in the preservation mode.

The preset safe temperature threshold value may be set to be lower than the second preset temperature threshold value. The preset safe temperature threshold value may be experimentally determined according to preservation effects of the food material at different temperatures. In some further embodiments, the preset safe temperature threshold value may be set to be lower than -5°C but greater than or equal to -14°C.

Exemplarily, in the case where the second preset temperature threshold value is set to -5°C, the preset safe temperature threshold value may be set to -10°C. In the present invention, by setting the preset safe temperature threshold value to be lower than the second preset temperature threshold value, it may be guaranteed that both the inside and the outside of the food material may undergo the ice crystal zone quickly, thereby achieving a better preservation effect.

Considering that there are high and low temperatures of objects to be handled currently placed in the freezer preservation chamber 120, in order to achieve a good preservation effect, the control mode may be flexibly adjusted according to differences in the temperature of the food material placed in the freezer preservation chamber. For example, when the temperature of the object to be handled currently placed in the freezer preservation chamber 120 is relatively low, the temperature of the object to be handled and the second preset temperature threshold value may be compared firstly. If the temperature of the object to be handled is lower than the second preset temperature threshold value, the refrigerator 100 may be controlled to operate in the quick thawing mode. If the temperature of the object to be handled is greater than or equal to the second preset temperature threshold value, whether the temperature of the object to be handled is lower than or equal to the first preset temperature threshold value may be further determined. If yes, the refrigerator 100 is controlled to operate in the preservation mode, and if no, the refrigerator 100 is controlled to operate in the quick freezing mode. For another example, if the temperature of the food material placed into the freezer preservation chamber 120 by a user has been already at a soft freezing temperature, the refrigerator 100 may be controlled to operate in the preservation mode.

In some embodiments, in the process that the refrigerator 100 operates in the quick thawing mode, if the temperature of the object to be handled increases to the preset preservation temperature threshold value, the refrigerator 100 is controlled to operate in the preservation mode, so as to maintain the temperature inside the freezer preservation chamber 120 at the preset preservation temperature threshold value, thereby carrying out soft freezing storage on the object to be handled.

Illustration will be carried out below by taking an example that the first preset temperature threshold value may be set to 0°C, the second preset temperature threshold value may be set to -5°C, the preset preservation temperature threshold value is set to -4°C, and the preset safe temperature threshold value may be set to -10°C.

When an object to be handled is placed in the freezer preservation chamber 120, the temperature of the object to be handled currently placed in the freezer preservation chamber 120 may be detected by means of the temperature sensor arranged on the inner wall of the freezer preservation chamber 120, which is denoted as T. Next, T may be compared with 0°C, -5°C and -4°C, respectively to obtain the comparison results that T is greater than 0°C, T is greater than or equal to -5°C but lower than or equal to 0°C, and T is lower than -5°C.

If T is greater than 0°C, the refrigerator 100 is controlled to operate in the quick freezing mode, so as to make T quickly decrease to -10°C. Then, the refrigerator 100 is controlled to operate in the quick thawing mode, so as to make T which has decreased to -10°C increase to -4°C quickly. Later, the refrigerator 100 is controlled to operate in the preservation mode, so as to keep T which has increased to -4°C at -4°C.

If T is greater than or equal to -5°C but lower than or equal to 0°C, the refrigerator may be controlled to operate in the preservation mode, so as to keep T at -4°C.

If T is lower than -5°C, the refrigerator may be controlled to operate in the quick thawing mode, so as to make T quickly increase to -4°C. Later, the refrigerator 100 is controlled to operate in the preservation mode, so as to keep T which has increased to -4°C at -4°C.

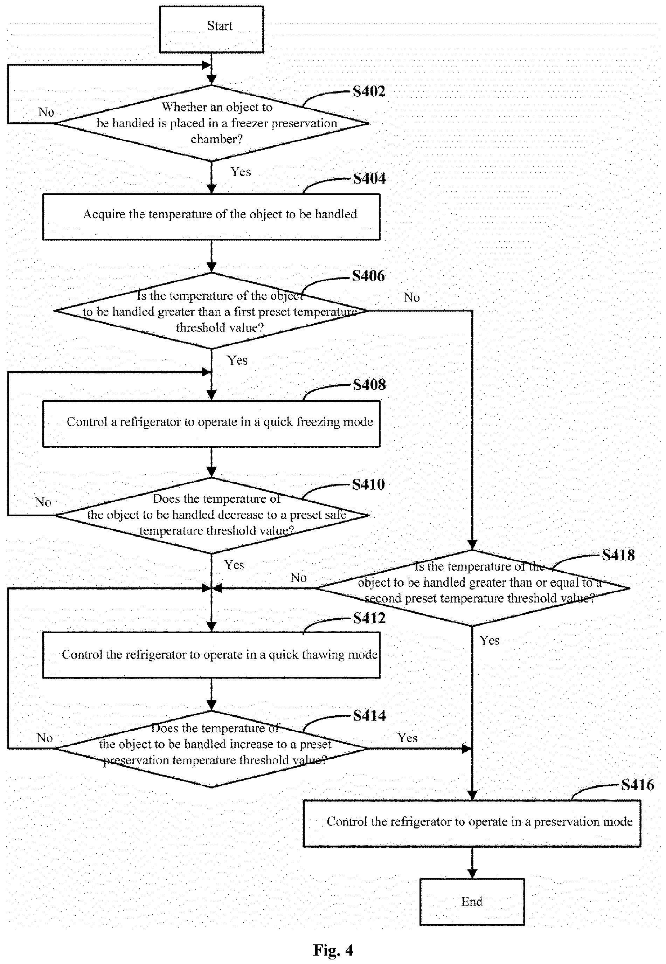

Fig. 4 is a flow chart of a refrigerator preservation control method according to another embodiment of the present invention. Referring to Fig. 4, the refrigerator preservation control method provided in this embodiment may include steps S402 to S416.

Step S402, whether an object to be handled is placed in a freezer preservation chamber is detected; if yes, step S404 is performed; and if no, step S402 continues to be performed.

Step S404, the temperature of the object to be handled placed in the freezer preservation chamber is detected.

Step S406, whether the temperature of the object to be handled is greater than a first preset temperature threshold value is determined; if yes, step S408 is performed; and if no, step S418 is performed.

Step S408, a refrigerator is controlled to operate in a quick freezing mode.

Step S410, whether the temperature of the object to be handled decreases to a preset safe temperature threshold value is determined; if yes, step S412 is performed; and if no, step S408 is performed.

Step S412, the refrigerator is controlled to operate in a quick thawing mode.

Step S414, whether the temperature of the object to be handled increases to a preset preservation temperature threshold value is determined; if yes, step S416 is performed; and if no, step S412 continues to be performed.

Step S416, the refrigerator is controlled to operate in a preservation mode.

Step S418, whether the temperature of the object to be handled is greater than or equal to a second preset temperature threshold value is determined; if yes, step S416 is performed; and if no, step S412 continues to be performed.

The embodiments of the present invention provide the refrigerator preservation control method and the refrigerator. In the refrigerator preservation control method provided in the present invention, the temperature of the object to be handled placed in the freezer preservation chamber is detected, thus the refrigerator 100 is controlled to operate in different operating modes according to differences in the temperature of the object to be handled, thereby achieving instant preservation.

Further, in the present invention, the preset safe temperature threshold value is set to be lower than the second preset temperature threshold value, thus it can be guaranteed that both the inside and outside of the food material may undergo the ice crystal zone quickly, thereby achieving a better preservation effect.

Further, in the present invention, by arranging the at least one thermal baffle 130, the storage compartment where the freezer preservation chamber is located may be separated into the freezer preservation area 111 and at least one storage area 112, and then the freezer preservation chamber 120 is arranged in the freezer preservation area 111, which may effectively isolate the heat exchange between the freezer preservation chamber 120 and other storage areas 112 in the storage compartment and reduce the refrigeration influence of other spaces on the freezer preservation chamber 120.

## Claims

1. A refrigerator (100) preservation control method, wherein a refrigerator (100) comprises a cabinet (110), in which is defined at least one storage compartment; and a freezer preservation chamber (120), arranged in the at least one storage compartment; and the method comprises:
detecting whether an object to be handled is placed in the freezer preservation chamber (120);
if yes, acquiring the temperature of the object to be handled;
acquiring a preset correspondence between temperatures of the object to be handled and operating modes of the refrigerator (100); and
controlling the refrigerator (100) to operate in an operating mode corresponding to the acquired temperature of the object to be handled, wherein
the operating modes comprise a quick freezing mode, configured to refrigerate the freezer preservation chamber (120) to reduce the temperature of the object to be handled; and a quick thawing mode, configured to thaw the freezer preservation chamber (120) to increase the temperature of the object to be handled; and
the step of controlling the refrigerator (100) to operate in the operating mode corresponding to the temperature of the object to be handled comprises: controlling, when the temperature of the object to be handled is greater than a first preset temperature threshold value, the refrigerator (100) to operate in the quick freezing mode; and controlling, when the temperature of the object to be handled is lower than a second preset temperature threshold value, the refrigerator (100) to operate in the quick thawing mode, the first preset temperature threshold value being greater than the second reset temperature threshold value.

2. The refrigerator (100) preservation control method according to claim 1, wherein
the operating modes further comprise a preservation mode, configured to maintain the temperature of the freezer preservation chamber (120) at a preset preservation temperature threshold value, the preset preservation temperature threshold value being set between the first preset temperature threshold value and the second preset temperature threshold value; and
the step of controlling the refrigerator (100) to operate in the operating mode corresponding to the temperature of the object to be handled further comprises: controlling, when the temperature of the object to be handled is greater than or equal to the second preset temperature threshold value but lower than or equal to the first preset temperature threshold value, the refrigerator (100) to operate in the preservation mode.

3. The refrigerator (100) preservation control method according to claim 2, wherein in a process that the refrigerator (100) operates in the quick freezing mode, if the temperature of the object to be handled decreases to a preset safe temperature threshold value, the refrigerator (100) is controlled to operate in the quick thawing mode; and
when the temperature of the object to be handled increases to the preset preservation temperature threshold value, the refrigerator (100) is controlled to operate in the preservation mode.

4. The refrigerator (100) preservation control method according to claim 3, wherein
the preset safe temperature threshold value is set to be lower than the second preset temperature threshold value.

5. The refrigerator (100) preservation control method according to claim 4, wherein
the preset safe temperature threshold value is set to be lower than -5°C but greater than or equal to -14°C.

6. The refrigerator (100) preservation control method according to any one of claims 2 to 5, wherein in a process that the refrigerator (100) operates in the quick thawing mode, if the temperature of the object to be handled increases to the preset preservation temperature threshold value, the refrigerator (100) is controlled to operate in the preservation mode.

7. A refrigerator (100), comprising:
a cabinet (110), in which is defined at least one storage compartment;
a freezer preservation chamber (120), arranged in the at least one storage compartment; and
a control module, comprising a memory and a processor, wherein the memory stores a control program, and when being executed by the processor, the control program is used for implementing the refrigerator (100) preservation control method according to any one of claims 1-6, further comprising:
a temperature sensor, arranged on an inner wall of the freezer preservation chamber (120) to sense whether an object to be handled is placed in the freezer preservation chamber (120), and detect the temperature of the object to be handled when sensing the object to be handled.

8. The refrigerator (100) according to claim 7, further comprising:
at least one thermal baffle (130), arranged in one storage compartment together with the freezer preservation chamber (120) and configured to separate a freezer preservation area (111) in the storage compartment, the freezer preservation chamber (120) being arranged in the freezer preservation area (111).

## Patentansprüche

1. Verfahren zur Steuerung der Konservierung eines Kühlschranks (100), wobei ein Kühlschrank (100) ein Schrank (110), in dem mindestens ein Lagerfach definiert ist; und eine Gefrierkonservierungskammer (120), die in dem mindestens einen Lagerfach angeordnet ist, umfasst; und wobei das Verfahren umfasst:
Erkennen, ob ein zu handhabendes Objekt in der Gefrierkonservierungskammer (120) platziert ist;
wenn ja, Erfassen der Temperatur des zu handhabenden Objekts;
Erfassen einer voreingestellten Korrespondenz zwischen den Temperaturen des zu behandelnden Objekts und den Betriebsmodi des Kühlschranks (100); und
Steuern des Kühlschranks (100), um in einem Betriebsmodus zu arbeiten, der der erfassten Temperatur des zu handhabenden Objekts entspricht, wobei
die Betriebsmodi einen Schnellgefriermodus, der so konfiguriert ist, dass die Gefrierkonservierungskammer (120) gekühlt wird, um die Temperatur des zu handhabenden Objekts zu verringern; und einen Schnellauftaumodus, der so konfiguriert ist, dass die Gefrierkonservierungskammer (120) aufgetaut wird, um die Temperatur des zu handhabenden Objekts zu erhöhen, umfassen; und
der Schritt des Steuerns des Kühlschranks (100), um in dem Betriebsmodus zu arbeiten, der der Temperatur des zu behandelnden Objekts entspricht, umfasst: Steuern des Kühlschranks (100) zum Betrieb im Schnellgefriermodus, wenn die Temperatur des zu behandelnden Objekts höher als ein erster voreingestellter Temperaturschwellenwert ist; und Steuern des Kühlschranks (100) zum Betrieb im Schnellauftaumodus, wenn die Temperatur des zu behandelnden Objekts unter einem zweiten voreingestellten Temperaturschwellenwert liegt, wobei der erste voreingestellte Temperaturschwellenwert größer als der zweite zurückgesetzte Temperaturschwellenwert ist.

2. Verfahren zur Steuerung der Konservierung eines Kühlschranks (100) nach Anspruch 1, wobei
die Betriebsmodi ferner einen Konservierungsmodus umfassen, der so konfiguriert ist, dass er die Temperatur der Gefrierkonservierungskammer (120) auf einem voreingestellten Konservierungstemperaturschwellenwert hält, wobei der voreingestellte Konservierungstemperaturschwellenwert zwischen dem ersten voreingestellten Temperaturschwellenwert und dem zweiten voreingestellten Temperaturschwellenwert eingestellt ist; und
der Schritt des Steuerns des Kühlschranks (100), um in dem Betriebsmodus zu arbeiten, der der Temperatur des zu behandelnden Objekts entspricht, ferner umfasst: Steuern des Kühlschranks (100) zum Betrieb in den Konservierungsmodus, wenn die Temperatur des zu behandelnden Objekts größer oder gleich dem zweiten voreingestellten Temperaturschwellenwert, aber kleiner oder gleich dem ersten voreingestellten Temperaturschwellenwert ist.

3. Verfahren zur Steuerung der Konservierung eines Kühlschranks (100) nach Anspruch 2, wobei in einem Prozess, in dem der Kühlschrank (100) im Schnellgefriermodus arbeitet, der Kühlschrank (100) so gesteuert wird, dass er im Schnellauftaumodus arbeitet, wenn die Temperatur des zu behandelnden Objekts auf einen voreingestellten sicheren Temperaturschwellenwert absinkt; und
wobei der Kühlschrank (100) so gesteuert wird, dass er im Konservierungsmodus arbeitet, wenn die Temperatur des zu behandelnden Objekts auf den voreingestellten Konservierungstemperaturschwellenwert ansteigt.

4. Verfahren zur Steuerung der Konservierung eines Kühlschranks (100) nach Anspruch 3, wobei
der voreingestellte sichere Temperaturschwellenwert so eingestellt ist, dass er niedriger als der zweite voreingestellte Temperaturschwellenwert ist.

5. Verfahren zur Steuerung der Konservierung eines Kühlschranks (100) nach Anspruch 4, wobei
der voreingestellte sichere Temperaturschwellenwert so eingestellt ist, dass er kleiner als -5°C, aber größer oder gleich -14°C ist.

6. Verfahren zur Steuerung der Konservierung des Kühlschranks (100) nach einem der Ansprüche 2 bis 5, wobei in einem Prozess, in dem der Kühlschrank (100) im Schnellabtaumodus arbeitet, der Kühlschrank (100) so gesteuert wird, dass er im Konservierungsmodus arbeitet, wenn die Temperatur des zu behandelnden Objekts auf den voreingestellten Konservierungstemperaturschwellenwert ansteigt.

7. Kühlschrank (100), umfassend:
einen Schrank (110), in dem mindestens ein Lagerfach definiert ist;
eine Gefrierkonservierungskammer (120), die in dem mindestens einen Lagerfach angeordnet ist; und
ein Steuermodul, das einen Speicher und einen Prozessor umfasst, wobei der Speicher ein Steuerprogramm speichert und das Steuerprogramm, wenn es von dem Prozessor ausgeführt wird, zum Implementieren des Verfahren zur Steuerung der Konservierung des Kühlschranks (100) nach einem der Ansprüche 1 bis 6 verwendet wird, wobei es ferner umfasst:
einen Temperatursensor, der an einer Innenwand der Gefrierkonservierungskammer (120) angeordnet ist, um zu erfassen, ob ein zu behandelndes Objekt in die Gefrierkonservierungskammer (120) plaztiert ist, und um die Temperatur des zu behandelnden Objekts zu erfassen, wenn das zu behandelnde Objekt erfasst wird.

8. Kühlschrank (100) nach Anspruch 7, ferner umfassend:
mindestens ein thermisches Leitblech (130), das zusammen mit der
Gefrierkonservierungskammer (120) in einem Lagerfach angeordnet und so konfiguriert ist, dass es einen Gefrierkonservierungsbereich (111) im Lagerfach abtrennt, wobei die Gefrierkonservierungskammer (120) in dem Gefrierkonservierungsbereich (111) angeordnet ist.

## Revendications

1. Une méthode de contrôle de conservation de réfrigérateur (100), dans laquelle un réfrigérateur (100) comprend un cabinet (110) dans lequel est défini au moins un compartiment de stockage ; et une chambre de conservation de congélation (120) disposée dans le compartiment de stockage ; et la méthode comprend :
la détection de la présence d'un objet à manipuler dans la chambre de conservation de congélation (120) ;
si oui, l'acquisition de la température de l'objet à manipuler ;
l'acquisition d'une correspondance prédéfinie entre les températures de l'objet à manipuler et les modes de fonctionnement du réfrigérateur (100) ; et
le contrôle du réfrigérateur (100) pour fonctionner dans un mode de fonctionnement correspondant à la température acquise de l'objet à manipuler, dans lequel
les modes de fonctionnement comprennent un mode de congélation rapide, configuré pour refroidir la chambre de conservation de congélation (120) afin de réduire la température de l'objet à manipuler ; et un mode de décongélation rapide, configuré pour décongeler la chambre de conservation de congélation (120) afin d'augmenter la température de l'objet à manipuler ; et
l'étape de contrôle du réfrigérateur (100) pour fonctionner dans le mode de fonctionnement correspondant à la température de l'objet à manipuler comprend : le contôle, lorsque la température de l'objet à manipuler est supérieure à une première valeur de seuil de température prédéfinie, du réfrigérateur (100) pour fonctionner en mode de congélation rapide ; et le contrôle, lorsque la température de l'objet à manipuler est inférieure à une seconde valeur de seuil de température prédéfinie, du réfrigérateur (100) pour fonctionner en mode de décongélation rapide, la première valeur de seuil de température prédéfinie étant supérieure à la seconde valeur de seuil de température prédéfinie.

2. La méthode de contrôle de conservation de réfrigérateur (100) selon la revendication 1, dans lequel
les modes de fonctionnement comprennent en outre un mode de conservation, configuré pour maintenir la température de la chambre de conservation de congélation (120) à une valeur de seuil de température de conservation prédéfinie, la valeur de seuil de température de conservation prédéfinie étant fixée entre la première valeur de seuil de température prédéfinie et la seconde valeur de seuil de température prédéfinie ; et
l'étape de contrôle du réfrigérateur (100) pour fonctionner dans le mode de fonctionnement correspondant à la température de l'objet à manipuler comprend en outre : le contrôle, lorsque la température de l'objet à manipuler est supérieure ou égale à la seconde valeur de seuil de température prédéfinie mais inférieure ou égale à la première valeur de seuil de température prédéfinie, du réfrigérateur (100) pour fonctionner en mode de conservation.

3. La méthode de contrôle de conservation de réfrigérateur (100) selon la revendication 2, dans laquelle dans un processus où le réfrigérateur (100) fonctionne en mode de congélation rapide, si la température de l'objet à manipuler diminue jusqu'à une valeur de seuil de température de sécurité prédéfinie, le réfrigérateur (100) est contrôlé pour fonctionner en mode de décongélation rapide ; et
lorsque la température de l'objet à manipuler augmente jusqu'à la valeur de seuil de température de conservation prédéfinie, le réfrigérateur (100) est contrôlé pour fonctionner en mode de conservation.

4. La méthode de contrôle de conservation de réfrigérateur (100) selon la revendication 3, dans lequel
la valeur de seuil de température de sécurité prédéfinie est fixée à une valeur inférieure à la seconde valeur de seuil de température prédéfinie.

5. La méthode de contrôle de conservation de réfrigérateur (100) selon la revendication 4, dans lequel
la valeur de seuil de température de sécurité prédéfinie est fixée à une valeur inférieure à -5°C mais supérieure ou égale à -14°C.

6. La méthode de contrôle de conservation de réfrigérateur (100) selon l'une quelconque des revendications 2 à 5, dans laquelle dans un processus où le réfrigérateur (100) fonctionne en mode de décongélation rapide, si la température de l'objet à manipuler augmente jusqu'à la valeur de seuil de température de conservation prédéfinie, le réfrigérateur (100) est contrôlé pour fonctionner en mode de conservation.

7. Un réfrigérateur (100) comprenant :
un cabinet (110) dans lequel est défini au moins un compartiment de stockage ;
une chambre de conservation de congélation (120) disposée dans le compartiment de stockage ; et
un module de commande comprenant une mémoire et un processeur, la mémoire stockant un programme de commande, et lorsqu'il est exécuté par le processeur, le programme de commande est utilisé pour mettre en oeuvre la méthode de contrôle de conservation de réfrigérateur (100) selon l'une quelconque des revendications 1 à 6, comprenant en outre :
un capteur de température disposé sur une paroi intérieure de la chambre de conservation de congélation (120) pour détecter la présence d'un objet à manipuler dans la chambre de conservation de congélation (120) et détecter la température de l'objet à manipuler lors de la détection de l'objet à manipuler.

8. Le réfrigérateur (100) selon la revendication 7, comprend en outre :
au moins un déflecteur thermique (130) disposé dans un compartiment de stockage avec la chambre de conservation de congélation (120) et configuré pour séparer une zone de conservation de congélation (111) dans le compartiment de stockage, la chambre de conservation de congélation (120) étant disposée dans la zone de conservation de congélation (111).
